Europäisches Patentamt

European Patent Office

Office européen des brevets

(11) Publication number: **0 418 082 A1**

# EUROPEAN PATENT APPLICATION

(21) Application number: 90310038.6

(22) Date of filing: 13.09.90

(51) Int. Cl.5: **B01D 69/08**, D01D 5/24

(30) Priority: 15.09.89 GB 8920990

(43) Date of publication of application:
20.03.91 Bulletin 91/12

(84) Designated Contracting States:
AT BE CH DE DK ES FR GB GR IT LI NL SE

(71) Applicant: **The British Petroleum Company p.l.c.**
**Britannic House Moor Lane**
**London EC2Y 9BU(GB)**

(72) Inventor: **Pacynko, Witold Franciszek**
**The British Petroleum Co. p.l.c., Chertsey**

Road
**Sunbury-on-Thames, Middlesex TW16 7LN(GB)**
Inventor: **Wilkes, John Steven, Kalsep Limited**
**Wey House, Langley Quay, Waterside Drive**
**Langley, Berkshire, SL3 6EX(GB)**

(74) Representative: **Dodding, Robert Anthony et al**
**BP INTERNATIONAL LIMITED Patents**
**Division Chertsey Road**
**Sunbury-on-Thames Middlesex, TW16 7LN(GB)**

(54) Membrane fabrication.

(57) Process for the fabrication of a hollow fibre asymmetric membrane comprising extruding a polymer dope solution and a coagulating core liquid into a support fluid. The support fluid is usually of a higher density than the polymer solution. The direction of extrusion is generally upwards into the body of the support fluid. Polymer dope solutions comprise polyimides, polysulphones, polyamides and cellulose acetates and the hollow fibres formed are suitable for use in a separation module.

## MEMBRANE FABRICATION

The present invention relates to processes for preparing hollow fibre membranes from polymer solutions. In particular the processes relate to membranes for liquid separation or filtration techniques, e.g. microfiltration and ultrafiltration.

Membranes have found wide industrial application in the fields of gas separations, liquid separation and filtration. The membranes may be used in a number of forms, the most common being hollow fibre and flat sheet membranes. Membranes in the form of hollow fibres have attraction in many separation applications in view of their self supporting nature under operating conditions and a greater surface area per unit volume of separation apparatus, than a flat membrane equivalent.

It is known to fabricate a hollow fibre membrane by extruding a solution of a polymer through a spinnerette capable of producing a hollow fibre and having a coagulant medium available to contact the extrudate and maintain the hollow fibre configuration. The hollow fibre spinning process has many variables capable of effecting the structure of the membrane, for example the particular solvent used for the polymer may influence the morphology of the membrane.

For a wet spinning process where the hollow fibre is extruded vertically downwards, the concentration of the polymer solution is held sufficiently high to ensure that the resultant hollow fibre precursor membrane has sufficient mechanical strength to withstand the spinning process. However for certain applications it is desirable to use polymer solutions of relatively low viscosity which tend not to give sufficient mechanical strength to the resultant hollow fibre precursor and which is liable to break or rupture under gravitational forces. The present invention is directed towards an improved process for fabricating hollow fibres particularly when using polymer solutions of low viscosity.

Thus according to the present invention there is provided a process for the fabrication of a hollow fibre asymmetric membrane comprising extruding a polymer solution and a core liquid into a support fluid, the support fluid being of a coagulating nature for a non-coagulating core liquid or of a non-coagulating nature for a coagulating core liquid, and the direction of extrusion being generally upwards into the body of the support fluid. The concentration of polymer in the solution is preferably low and is desirably from 2 to 20% by weight of polymer and having a viscosity range from 0.01 to 20 Pas. Desirably the density of the support fluid is greater than that of the polymer solution.

Conventionally the polymer solution and coagulant are extruded simultaneously from a spinneret. The hollow fibre precursor forms and has sufficient mechanical strength to allow continuous formation as it falls under gravity from the jet. The concentrations of polymer solutions used for this type of process are relatively high. By inverting the spinneret and extruding upwardly, the use of polymer solution of relatively low concentration is possible as the strains resulting from downward extrusion are greatly reduced. During upward extrusion, the hollow fibre precursor is drawn away as it is formed by polymer solution/coagulant contact as the polymer emerges from the jet. When the precursor is formed, it should be under conditions of minimum mechanical disturbance and the residence time in the support fluid must be sufficient to allow polymer coagulation and the formation of an integral hollow fibre.

The process may be applied to various polymers in order to form hollow fibre membranes including polyimides, polyetherimides, polysulphones, polyethersulphones, polyamides and cellulose acetates.

Preferred coagulant systems comprise water, methanol, low molecular weight alcohols and methyl ethyl ketone (MEK) and mixtures of one or more of these with n-methyl pyrrolidone (NMP), dimethylformamide (DMF) and glycerol.

The support fluid preferably comprised n-methyl pyrrolidone, tetrahydrofuran (THF), methanol or glycerols.

For extrusion of polymer solution into a coagulating support fluid, the resultant asymmetric hollow fibre has its porous separation layer on its external surface (externally skinned) and the extrusion with a coagulating core liquid, the resultant asymmetric hollow fibre has its porous separation layer on its internal surface (internally skinned).

The support fluid is not intended to participate in the precipitation process and is chosen to have to have appropriate physical and chemical characteristics. Thus the composition of the support fluid is chosen so as to give characteristics such that nul or minimal forces are exerted on the fibre as it is formed by inner core coagulation. It is formulated to be (a) of a specific density to thereby control the polymer solution buoyancy and (b) of minimum solvent power for the polymer such that the polymer will neither tend to dissolve nor precipitate on contact. Thus the particular support fluid used is dependent on the polymer solution, in particular the density and composition of the polymer solution.

The hollow fibres may be used in the fabrication of hollow fibre separation modules. The modules may be, for example, of the radial or axial flow type and the hollow fibres are arranged in closely packed bundles to effect micro or ultra filtration.

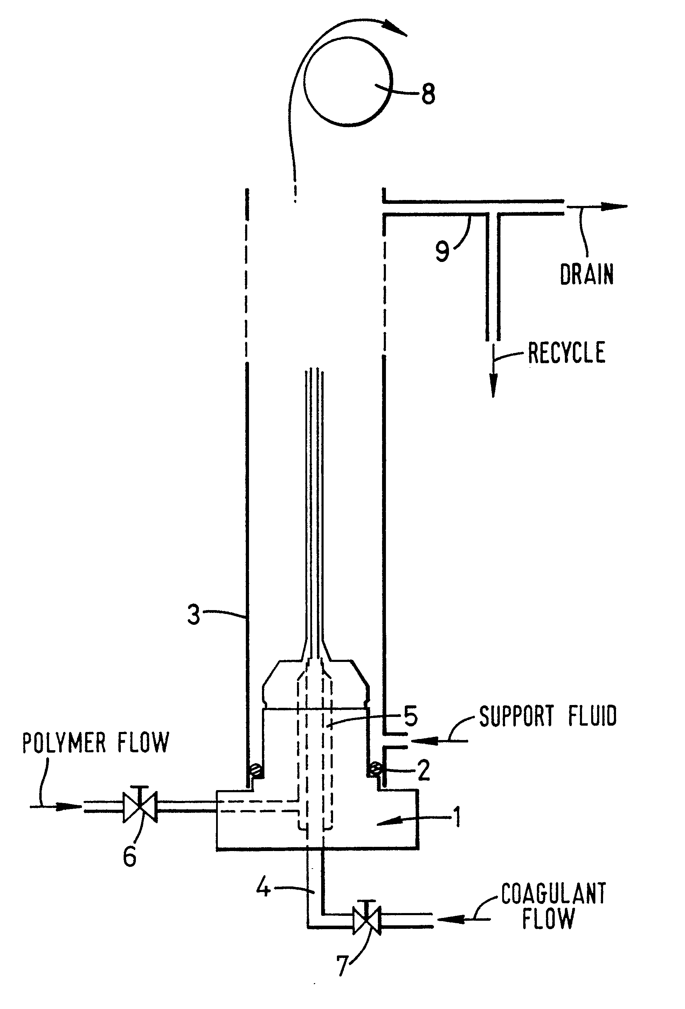

The invention will now be described by way of example only. The drawing shows a diagrammatic cross-section of a system for the production of hollow fibre microporous membranes from polymer solutions.

The system comprises an upwardly pointing spinneret 1 which is sealed by an "O" ring 2 to a transparent vertical cylinder 3. The spinneret 1 has a core nozzle 4 through which a coagulating liquid can be passed and a surrounding ring nozzle 5 through which the polymer solution can be extruded. The spinneret 1 has flow control valves 6, 7 for controlling polymer and coagulant flows. At the upper end and above the cylinder is a driven guide or collection bobbin 8 for drawing off the spun hollow fibre and redirecting it to the wash tank. The cylinder has an overflow 9 allowing drainage and recycle of the support liquid.

In use, a polymer solution is prepared by dissolving polymer in a suitable solvent. The polymer solutions desirably have a concentration of 2 to 20% by weight of polymer and are of low viscosity. The resultant polymer solution is then deaerated.

The polymer solution was then pumped to the ring nozzle 5 of the (tube in orifice) spinneret 1 and the coagulating fluid to the core nozzle 4. The hollow fibre precursor is drawn upwardly through the vertical cylinder 3 containing the support liquid and passes onto the collecting device or bobbin 8. The coagulating effect of the central bore coagulant allows a fairly slow polymer precipitation until the polymer is completely precipitated from solution to the support interface and the hollow fibre membrane formed. The residence time of the polymer in the solution is typically 0.5 to 6 minutes. The resultant membrane is washed after winding on the bobbin with a suitable liquid. The winding of the hollow fibre onto the bobbin is carried out using minimum winding tension. The temperature range for the fibre forming process is typically -4 to 60°C.

The spinnerets are of a conventional tube in orifice plate design. The polymer solution is introduced through an entry port and delivered to the orifice plate gap via flow channels in the hypodermic jet. The inner bore coagulant is introduced through an entry port and is delivered to the hypodermic tube outlet. The centre bore hypodermic tube stands nominally 1 mm proud of the orifice plate thus ensuring no back penetration of coagulant to the spinneret body with consequent polymer precipitation prior to delivery. A liquid tight "O" ring sealing collar near the spinneret base allows for a glass spin tube to be fitted. With a spin tube fitted, a support fluid may be introduced at an inlet port into a narrow flow channel between the inner wall of the spin tube and the spinneret body, ultimately flowing past the jet plate and filling the spin tube chamber.

Table 1 shows the results of a number of examples of ultrafiltration polyimide membranes prepared by the above technique from polyimide solutions comprising N-methylpyrrolidone (NMP) and tetrahydrofuran (THF) solvent systems. The support fluid used was a blend of NMP, THF, methanol and glycerol and had a slightly higher density than the polymer solution, the polymer extrusion giving rise to the development of a slowly moving column of polymer solution up the spin tube or vertical cylinder. The polyimide dope solutions comprised 9-12 wt% of 'Ultem' polyimide, 40-90 wt% of NMP and 9-50 wt% of THF.

The coagulant was prepared by combining the non-solvents of isopropanol and water in the required proportions followed by filtration and degassing.

The support fluid was prepared by combining the NMP, THF, methanol and glycerol in the appropriate proportions and mixed thoroughly.

TABLE

| Dope wt% Formulation | | | Dope Density gms cm$^{-3}$ | Coagulant Composition (wt%) | Support Fluid Composition wt% | | | | Support Density gms/cm$^3$ | Spin Rate mmin$^{-1}$ | Temp °C | Flux 1 min$^{-1}$m$^{-2}$ | % Rejection γ-globulin | Fibre Dimensions |
|---|---|---|---|---|---|---|---|---|---|---|---|---|---|---|
| Polyimide | THF | NMP | | | NMP | THF | MeOH | Glycerol | | | | | | |
| 12 | 44 | 44 | - | - / 80:20 / H$_2$O IPA | 90 | | | 10 | - | 3 | - | 1 -> 2 | 100 | Fibre / 0.5 -> 0.65 mm OD / 70 -> 100 μ wall |
| 10 | 45 | 45 | - | IPA:H$_2$O:Glycerol / 60:16:24 | 68 | 25.2 | 6.8 | - | - | 3 | - | 9 | >95 | 0.8 -> 1.0 mm OD / 90 -> 110 μ wall |
| 10 | 45 | 45 | - | Propylene glycol/Methanol / 70:30 | 68 | 25.2 | 6.8 | - | - | 3 | - | 10 | >95 | |
| 9 | 45 | 45 | | 50:50 / MeOH:H$_2$O | 68 | 25.2 | 6.8 | - | - | 4 | - | 6 -> 8 | - | 0.8 mm OD / 0.6⁻07 mm ID |
| 9 | 45.5 | 45.5 | 0.932 | 50:50 / MeOH:H$_2$O | 62.4 | 30.6 | 7 | - | 0.944 | 4 | 29 | 15 -> 25 | >95 | 0.8 -> 1.0 mm OD / 0.7 -> 0.8 ID |
| 9 | 45.5 | 45.5 | 0.932 | 60:40 | 62.4 | 30.6 | 7 | - | 0.944 | 4 | 29 | 8 -> 18 | - | |
| 9 | 45.5 | 45.5 | 0.948 | 60:40 | 71 | 20.5 | 8.3 | | 0.94 | 3 | 22 | - | - | |
| 9 | 45.5 | 45.5 | 9.95 | 60:40 | 62.96 | 22.94 | 9.04 | 5.06 | 0.952 | 2.68 | 22 | - | - | |

EP 0 418 082 A1

**Claims**

1. Process for the fabrication of a hollow fibre asymmetric membrane comprising extruding a polymer solution and a core liquid into a support fluid, the support fluid being of a coagulating nature for a non-coagulating core liquid or of a non-coagulating nature for a coagulating core liquid, and the direction of extrusion being generally upwards into the body of the support fluid.

2. Process according to claim 1 in which the polymer solution comprises a polyimide, polyetherimide, polysulphone, polyethersulphone, polyamide or a cellulose acetate.

3. Process according to claim 2 in which the polymer solution comprises a polyimide at a concentration of 2 to 20 wt%.

4. Process according to claims 1 to 3 in which the coagulant core liquid comprises water, methanol, low molecular weight alcohol or methyl ethyl ketone, or mixtures of one or more of them with n-methyl pyrrolidone, dimethylformamide, or glycerol.

5. Process according to claim 4 in which the coagulant core liquid comprises iso-propanol and water or propylene glycol and methanol.

6. Process according to any of the preceding claims in which the support fluid comprises n-methyl pyrrolidone, tetrahydrofuran, methanol or glycerol or a mixture of the aforesaid.

7. Process according to any of the preceding claims in which the support fluid comprises n-methyl pyrrolidone at 50-90 wt%, tetrahydrofuran at 10-30 wt%, methanol at 0-15 wt% and glycerol at 0-15 wt%.

8. Process according to any of the preceding claims in which the viscosity of the polymer solution is from 0.01 to 20 Pas.

9. Process according to any of the preceding claims in which the density of the support fluid is greater than that of the polymer solution.

10. Hollow fibre asymmetric membranes suitable for microfiltration and/or ultrafiltration whenever prepared by a process according to any of claims 1 to 6.

**European Patent Office**

**EUROPEAN SEARCH REPORT**

Application Number

**EP 90 31 0038**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DD-A-1 319 41  (AKAD. DER WISSENSCHAFTEN DDR) <br> * Abstract; claims 2,9,10; page 4, line 11 - page 5, line 7; examples 1,3 * | 1,8-10 | B 01 D 69/08 <br> D 01 D 5/24 |
| Y | | 2 | |
| X | PLASTE UND KAUTSCHUK, vol. 28, no. 9, 1981, pages 499-500; V. GRÖBE et al.: "Hohfläden nach dem Viskoseverfahren für Dialyse und Ultrafiltration" <br> * Whole article * | 1,9,10 | |
| A | EP-A-0 135 593  (TERUMO K.K.) <br> * Abstract; figure 1; claim 1; page 11, line 1 - page 15, line 15 * | 1,9,10 | |
| P,X | PATENT ABSTRACTS OF JAPAN, vol. 13, no. 585 (C-669)[3933], 22nd December 1989; <br> & JP-A-1 245 809 (ASAHI CHEM.) 02-10-1989 <br> * Abstract * & DATABASE WPIL, AN = 89/329239, Derwent Publications Ltd, London, GB | 1,9,10 | |
| Y | EP-A-0 291 679  (GKSS) <br> * Abstract; claims 1,3,5-8; page 2, line 29 - page 3, line 31 * | 2-4 | TECHNICAL FIELDS SEARCHED (Int. Cl.5) |
| Y | GB-A-2 192 581  (BRITISH PETROLEUM CO.) <br> * Whole document * | 5 | B 01 D <br> D 01 D |

The present search report has been drawn up for all claims

| Place of search | Date of completion of search | Examiner |
|---|---|---|
| The Hague | 23 November 90 | HOORNAERT P.G.R.J. |